# EUROPEAN PATENT SPECIFICATION

(11) **EP 1 001 278 B1**
(45) Date of publication and mention of the grant of the patent: **06.04.2005**
(21) Application number: 99203350.6
(22) Date of filing: 11.10.1999
(51) Int. Cl.: G01T 1/29

(54) **A method for monitoring a dose of penetrating radiation absorbed by an object**
Verfahren zur Überwachung der aufgenommenen Dosis in einem Objekt mittels durchdringendes Strahlens
Procédé de surveillance de la dose absorbée dans un objet par rayonnement pénétrant

(30) Priority: 13.02.1999 EP 99200436; 10.11.1998 EP 98203794
(43) Date of publication of application: 17.05.2000
(73) Proprietor: AGFA-GEVAERT, 2640 Mortsel (BE)
(72) Inventor: Struye, Luc, 2640 Mortsel (BE); Leblans, Paul, 2640 Mortsel (BE); Willems, Peter, 2640 Mortsel (BE)

(56) References cited:
- EP-A- 0 679 909
- EP-A- 0 844 497
- US-A- 4 970 393
- PATENT ABSTRACTS OF JAPAN vol. 095, no. 003, 28 April 1995 (1995-04-28) & JP 06 337300 A (NICHIA CHEM IND LTD), 6 December 1994 (1994-12-06)
- PATENT ABSTRACTS OF JAPAN vol. 095, no. 008, 29 September 1995 (1995-09-29) & JP 07 122366 A (OKI ELECTRIC IND CO LTD), 12 May 1995 (1995-05-12)

## Description

### FIELD OF THE INVENTION

This invention relates to a method for monitoring the dose of penetrating radiation absorbed by an object. It relates especially to a method for personnel monitoring wherein the dosimeter comprises a storage phosphor and wherein the result of the dosimetry is displayed on decentralised displays.

### BACKGROUND OF THE INVENTION

Several means and ways have be developed to monitor the amount of radiation that has been absorbed by an object. Especially in the field of personnel monitoring several types of dosimeters and read-out apparatus have been proposed.

Well-known types of dosimeters are e.g. based on CsI-crystal scintillators, mostly in form of a pencil, which provide permanent control. When a quantified critical or threshold value becomes exceeded, a system in form of a sound alarm may warn the controlled person. Another detection system makes use of detectors in form of a badge which, after having been borne during a certain period of time are controlled centrally. Quantifying irradiation can be based on silver halide photography (as e.g. in nuclear power-stations, described as in "Gebrauchsanweisung für das Personendosimeter mit Ganzkörperdosimetersonden, Typ GSF-Film-GD 10/20, GSF-Forschungszentrum für Umwelt und Gesundheit GmbH - Institut für Strahlenschutz - Auswertungsstelle für Strahlendosimeter - Stand: 1 März 1994).

Another quantifying method can be based on thermoluminescence (e.g. with LiF detectors) or on PSL-dosimetry wherein phosphate glass becomes stimulated with a pulsed ultraviolet laser and wherein erasure is performed thermally.

In EP-A-844 497 a dosimeter using a storage phosphor as means for monitoring the absorbed dose has been disclosed. The amount of energy of the penetrating radiation stored in the phosphor is proportional to the absorbed dose and can be read out and the remaining amount of energy stored in the phosphor can be erased by erasing radiation.

However most of the means for personnel monitoring are not easily connected to an automatic reading system wherein not only the radiation dose absorbed on a particular moment can be read, but where also the radiation history of each individual person can easily be tracked. Moreover most of the means for personnel monitoring have, for reading, to be processed in a centralised placed and the result is not directly available, neither in time nor place, to the person being monitored. Therefore there is still need for a further method for personnel monitoring wherein a reusable dosimeter can be used that can automatically be read out, the result displayed in a decentralised way and where the radiation history of a person can automatically be tracked.

### OBJECTS AND SUMMARY OF THE INVENTION

It is an object of the invention to provide a method for monitoring the dose of penetrating radiation absorbed by an object using a reusable dosimeter making it possible to keep automatically track of the "radiation history" of the object.

It is a further object to provide a method for monitoring the dose of penetrating radiation absorbed by an object using a reusable dosimeter making it possible to check the absorbed dose in a decentralised reader.

Further objects and advantages of the invention will be come clear from the detailed description herein after.

The object of the invention is realised by providing a method for monitoring a dose of penetrating radiation absorbed by an object provided with a monitoring device including a storage phosphor for storing energy from penetrating radiation, characterised by the steps of
- coupling said monitoring device at predetermined intervals to a source of stimulating light, in such a way that said stimulating light impinges on said phosphor,
- activating said source of stimulating light so as to cause said storage phosphor to emit an amount of fluorescent light in proportion to an amount of stored energy,
- reading said amount of fluorescent light and converting said amount of fluorescent light in an electric signal,
- storing electric signal(s) obtained at said predetermined intervals and processing them so as to evaluate a total amount of radiation absorbed by said object,
- comparing said total amount with a pre-defined threshold value for obtaining a difference, and
- displaying said difference on a decentralised display.

### DETAILED DESCRIPTION OF THE INVENTION

It was found that dosimeters, for use in the dosimetry of objects as well as for use in personnel monitoring, wherein the radiation absorbing device contains a stimulable phosphor for absorbing the dose of penetrating radiation could easily be read out without the need of much processing. In such dosimeters, the amount of absorbed radiation could directly, in time as well as in place, be converted in an electric signal value that could be stored and manipulated in a computer. In EP-A-844 497, EP-A-892 283 and EP-A 1 001 277 dosimeters comprising stimulable phosphors have been disclosed.

This present an advantage over the classical dosimeter. In the latter dosimeters the absorbed dose of penetrating radiation is only known after some time and is measured away from the place where penetrating radiation is used. This can be harmful to the personnel working with penetrating radiation since such person is only warned of having received a dose of penetrating radiation only after some time. Thus such a person can in the mean time between receiving the radiation dose and knowing that dose still work in an environment wherein the risk of radiation exist, although on the basis of the received dose such person would be prohibited working in such place.

Thus a dosimetric method that makes it possible to read the absorbed dose immediately at the place where the radiation risk is present, gives the advantage that a person, having received a dose of penetrating radiation can know it immediately and the necessary safety measures can be taken directly.

This problem can be solved when using a photostimulable phosphor as device for absorbing the penetrating radiation. Storage phosphors are inorganic substances that upon irradiation by penetrating radiation absorb energy of the penetrating radiation and store a portion of said energy. The stored energy can then later on be detected by irradiating said storage phosphor (stimulating said phosphor) by electromagnetic radiation with wavelengths ranging from 300 nm to 1200 nm (i.e. by stimulation light) or by heating said phosphor. Upon said irradiation or heating all or a portion of the energy stored in the storage phosphor is released as electromagnetic radiation (e.g., Ultraviolet (UV) light, visible light, and Infrared (IR) light). This electromagnetic radiation, further on called "fluorescent light", can then be detected. Such phosphors are well known from their use in medical imaging, where, after exposure to penetrating radiation the phosphor is pixel-wise stimulated. When using such a phosphor in dosimetry, the phosphor does not have to be pixel-wise stimulated, a simple overall stimulation is sufficient, since in dosimetry only the amount of absorbed penetrating radiation has to be determined. Thus the detection of an amount of penetrating radiation stored in a storage phosphor (photostimulabale phosphor) can proceeds without any complicated processing, therefore it is possible to build a simple, small, inexpensive reader for the reading the amount of energy stored in the storage phosphor and displaying this amount. Such a reader can easily be placed at or near the location where the penetrating radiation is used so that the absorbed dose can immediately be read at the place where the radiation risk is present.

Basically the method of the present invention comprises the steps of
- providing an object with a device for absorbing penetrating radiation, including a storage phosphor for storing energy from said penetrating radiation, is characterised by the steps of
- coupling said storage phosphor at predetermined intervals to a source of stimulation light, in such a way that said stimulation light impinges on said phosphor,
- activating said source of stimulation light so as to cause said storage phosphor to emit an amount of fluorescent light in proportion to an amount of stored energy,
- reading said amount of fluorescent light and converting it in an electric signal,
- storing electric signal(s) obtained at said predetermined intervals and processing them so as to evaluate a total amount of radiation absorbed by said object,
- comparing said total amount with a pre-defined threshold value for obtaining a difference value, and
- displaying said difference value on a decentralised display.

This decentralised display can be a display screen or a printer.

In a preferred embodiment of the invention said steps of activating said source of stimulating light so as to cause said storage phosphor to emit an amount of fluorescent light in proportion to an amount of stored energy, reading said amount of fluorescent light and converting said amount of fluorescent light in an electric signal value, proceeds in a decentralised reader. From this reader the electric signal value can then be sent to a central computer where the electric signal value(s) obtained at said predetermined intervals is stored and processed so as to evaluate a total amount of radiation absorbed by the object and where said total amount is compared with a pre-defined threshold value for obtaining a difference value. This difference value is then sent back to a decentralised display at or near the location where the penetrating radiation is used.

In a further preferred embodiment also the steps of storing electric signal value(s) obtained at said predetermined intervals and processing them so as to evaluate a total amount of radiation absorbed by said object, and comparing said total amount with a pre-defined threshold value for obtaining a difference value, are executed in the decentralised reader from where it is sent to a display, that can be incorporated in the reader or that can be a separate device. When all steps of the method are executed in a decentralised reader, it may be beneficial to sent the difference value to a centralised memory so that the radiation history of the object can be kept centrally.

### The storage phosphor

The method of this invention can be implemented using any storage phosphor known in the art. Heat stimulable phosphors, useful in the present invention are, e.g., SrS:Ce,Sm; SrS:Eu,Sm; etc., as disclosed in US 3,859,527 or LiF:Mg,Ti available from Harshaw Chemical Company, Cleveland, Ohio, USA.

Light stimulable storage phosphors also called stimulable phosphors, photostimulable phosphors, are well known in the art of medical radiography. A system for radiography, using storage phosphors, has been described in US-P 4,239,968 where a method is claimed for recording and reproducing a radiation image comprising the steps of (i) causing a visible ray- or infrared ray-stimulable phosphor to absorb a radiation passing through an object, (ii) stimulating said phosphor with stimulation rays selected from visible rays and infrared rays to release the energy of the radiation stored therein as fluorescent light, wherein said phosphor is an alkaline earth metal fluorohalide phosphor represented by the formula : (Ba₁₋ₓMₓ^{II})FX:yA wherein M^{II} is one or more of Mg, Ca, Sr, Zn and Cd; X is one or more of Br, Cl or I
A is at least one member of the group consisting of Eu, Tb, Ce, Tm, Dy, Pr, Ho, Nd, Yb and Er; and x is in the range 0 ≤ x ≤ 0.6 and y is in the range 0 ≤ y ≤ 0.2, and that the wavelength of said stimulating rays is not less than 500 nm.

Any variant of alkaline earth metal fluorohalide stimulable phosphor is useful in the present invention. Typical examples of such stimulable phosphors are given below, without however limiting the bariumfluorohalide useful in the present invention to these examples.

In EP-A 345 903 a phosphor has been disclosed with formula Ba₁₋ₓSrₓF_{2-a-b}BrₐX_{b}:zA, wherein X is at least one member selected from the group consisting of Cl and I; x is in the range 0.10 ≤ x ≤ 0.55 ; a is in the range 0.70 ≤ a ≤ 0.96; b is in the range 0 ≤ b < 0.15 ; z is in the range 10⁻⁷ < z ≤ 0.15, and A is Eu²⁺ or Eu²⁺ together with one or more of the co-dopants selected from the group consisting of Eu³⁺, Y, Tb, Ce, Tm, Dy, Pr, Ho, Nd, Yb, Er, La, Gd and Lu, and wherein fluorine is present stoichiometrically in said phosphor in a larger atom % than bromine taken alone or bromine combined with chlorine and/or iodine.

In US 4,261,854 a phosphor is disclosed with formula BaFX:xCe,yA wherein 0 < x ≤ 2 10⁻¹ en 0 ≤ y ≤ 5 10⁻³.

In US 4,336,154 a phosphor is disclosed with formula
(Ba₁₋ₓM²⁺ₓ)F₂.aBaX₂:yEuzB, wherein 0.5 ≤ a ≤ 1.25 ; 0 ≤ x ≤ 1 ; 10⁻⁶ ≤ y ≤ 2 10⁻¹ ; 0 < z ≤ 2 10⁻¹.

In EP-A 704 511 a stimulable bariumfluorohalide is disclosed with formula Ba_{1-x-y" -z-r}SrₓPb_{y"} Cs₂ᵣEu_{z}F_{2-a-b}BrₐI_{b}, wherein
0 ≤ x ≤ 0.30, 10⁻⁴ < y'' < 10⁻³, 10⁻⁷ < z < 0.15, 0 ≤ r < 0.05, 0.75 ≤ a + b ≤ 1.00, 0.05 < b < 0.20.

In EP-A 835 920 a stimulable phosphor has been disclosed with formula
Ba_{1-x-y-p-3q-z}SrₓM_{y}²⁺M₂ₚ¹⁺M_{2q}³⁺F_{2-a-b}BrₐI_{b};zEu, wherein M¹⁺ is
at least one alkali metal selected from the group consisting of Li, Na, K, Rb and Cs; M²⁺ is at least one divalent metal selected from the group consisting of Ca, Mg and Pb; M³⁺ is at least one trivalent metal selected from the group consisting of Al, Ga, In, Tl, Sb, Bi, Y, La, Ce, Pr, Nd, Sm, Gd, Tb, Dy, Ho, Er, Tm, Yb and Lu; 0 ≤ x ≤ 0.30, 0 ≤ y ≤ 0.10, 0 ≤ p ≤ 0.3, 0 ≤ q ≤ 0.1, 0.05 ≤ a ≤ 0.76, 0.20 ≤ b ≤ 0.90, a + b < 1.00 and 10⁻⁶ ≤ z ≤ 0.2.

Not only bariumfluorohalide storage phosphors can be used in this invention, but also halosilicate phosphors as disclosed in, e.g., EP 304 121, EP 382 295 and EP 522 619.

Although any stimulable (storage) phosphor known in the art is useful in a label according to the present invention it is preferred to use stimulable phosphors with slow dark decay. A storage phosphor, having stored energy after being exposed to penetrating radiation, releases (part) of the stored energy as stimulated light upon stimulation with stimulation light, as explained above. A storage phosphor, having stored energy after being exposed to penetrating radiation, can release said stored energy also without irradiation with stimulation light. This latter way of releasing energy is called the "dark decay".

The dark decay is measured by irradiating a phosphor by penetrating radiation of 70 kVp, and, immediately after said irradiation, stimulating said phosphor by a He-Ne laser of 30 mW. The fluorescent light emitted by the phosphor upon stimulation is collected and brought to a photomultiplier (Hamamatsu R 376) giving a corresponding electrical current, proportional to the amount of emitted fluorescent light. This give the initial value of the amount of fluorescent light. The irradiation of the phosphor with penetrating radiation is repeated, but the reading of the amount of stimulable light for a given intensity of stimulating energy only take place after keeping the irradiated phosphor for a given time in the dark. This process is repeated and the time after which the emitted fluorescent light, (and thus the energy remaining in the phosphor) of a phosphor kept in the dark, has fallen to 1/e is recorded as "dark decay". A storage phosphor, for use in the first embodiment of this invention, has preferably a dark decay longer than 60 minutes, preferably longer than 120 minutes.

### The device for absorbing penetrating radiation

The device for absorbing penetrating radiation including a storage phosphor, useful in the method of this invention, can comprise a storage phosphor in the form of a self-supporting panel, but preferably the storage phosphor is coated on a support.

The storage phosphor and an electroluminescent device can be coupled together in the dosimeter. Such dosimeters have been described in EP-A 1 001 277 titled "Re-usable personnel monitoring device". Such a device can be A device for recording and storing incident radiation energy and for reading said energy comprising :
- a stimulable phosphor absorbing and storing said energy and being stimulable with a wavelength λₐ,
- an electroluminescent phosphor emitting, upon application of an electrical field, stimulation light with said wavelength λₐ wherein said device is equipped with means in order to apply an electrical field on said electroluminescent phosphor, and wherein said stimulable phosphor and said electroluminescent phosphor are positioned relative to each other so that said light emitted by said electroluminescent phosphor reaches said stimulable phosphor for stimulating said phosphor in order to release stimulated light as a detectable signal.

The device can comprise in order
- a storage phosphor panel as a storage medium for absorbing incident radiation energy,
- adjacent thereto at one side a transparent support permitting exposure of said storage phosphor panel with said incident radiation energy,
- adjacent thereto on the other side and/or incorporated into the storage phosphor panel, thus forming one layer in that case, an electroluminescent layer emitting stimulation light in order to read-out said storage phosphor panel;
- adjacent to the said electroluminescent layer and farther from the storage phosphor panel, consecutively
   - an isolating layer and a conducting layer.

The device comprises further preferably means for identifying the object or the person that was provided with the dosimeter. These means for identification can be human readable or can be machine readable. Preferably the identification means are machine readable, e.g. bar-codes, a magnetic memory, a electronic memory chip, a electronic processor chip, etc. This makes it possible, upon insertion of the dosimeter in a decentralised reader, to automatically identify the bearer. When the reading of the absorbed dose proceeds in a decentral way, but when the radiation history is stored centrally, the automatic identification can be used to retrieve that radiation history from the central member. In that way can at any moment the actual dose absorbed in the dosimeter be displayed decentrally together with the radiation history.

When the dosimeter comprises a processor chip then it is, according to the method of the present invention possible to execute the steps of storing electric signal(s) obtained at said predetermined intervals and processing them so as to evaluate a total amount of radiation absorbed by said object, and comparing said total amount with a pre-defined threshold value for obtaining a difference value, and storing the radiation history in the processor chip on the dosimeter.

### The decentralised reader

Such a reader comprises a slot for inserting the storage phosphor, means for emitting stimulation light positioned in such a way that the stimulation light can reach the storage phosphor.

The means for emitting stimulating light can be a source infrared light (even an heat source) for heat stimulable phosphors or can be any light source known in the art of radiography with storage panels. Preferably it is an electroluminescent device so that the reader can be made compact.

In the method of this invention it is also possible to use dosimeter wherein the storage phosphor and an electroluminescent device are coupled together in the dosimeter. Such dosimeters have been described in EP-A 1 001 277 titled "Re-usable personnel monitoring device". In this case no stimulating light source is necessary in the reader.

The reader comprises further means for reading the identification on the dosimeter, means for reading the emitted light and converting it in to an electric signal, means for sending that electric signal to a central computer and/or means to process the electric signal in the de-central reader itself and/or means for using a processor chip on the dosimeter for processing the electric signal, etc. The reader further comprises a display screen or is coupled to a printer to show the condition of the person or object wearing the dosimeter with respect to the actual absorbed dose and the radiation history.

## Claims

1. A method for monitoring a dose of penetrating radiation absorbed by an object provided with a device for absorbing penetrating radiation, including a storage phosphor for storing energy from said penetrating radiation, **characterised by** the steps of
- coupling said storage phosphor at predetermined intervals to a source of stimulation light, in such a way that said stimulation light impinges on said phosphor,
- activating said source of stimulation light so as to cause said storage phosphor to emit an amount of fluorescent light in proportion to an amount of stored energy
- reading said amount of fluorescent light and converting it in an electric signal,
- storing electric signal(s) obtained at said predetermined intervals and processing them so as to evaluate a total amount of radiation absorbed by said object,
- comparing said total amount with a pre-defined threshold value for obtaining a difference value, and
- displaying said difference value on a decentralised display.

2. A method according to claim 1, wherein said source of stimulating light is an electroluminescent device.

3. A method according to claim 1 or 2 wherein said radiation absorbing device further comprises machine readable identification means selected from the group consisting of bar-codes, magnetic recording means, an electronic memory chip and a processor chip.

4. A method according to any one claims 1 to 3, wherein said steps of activating said source of stimulating light so as to cause said storage phosphor to emit an amount of fluorescent light in proportion to an amount of stored energy, reading said amount of fluorescent light and converting said amount of fluorescent light in an electric signal, proceed in a decentralised reader. .

5. A method according to claim 4, wherein said electric signal value is sent to a central computer for storing said electric signal(s) , processing them so as to evaluate a total amount of radiation absorbed by said object, and comparing said total amount with a pre-defined threshold value for obtaining a difference value and said difference value is sent to said decentralised display.

6. A method according to claim 4, wherein also said steps of
- storing electric signal(s) obtained at said predetermined intervals and processing them so as to evaluate a total amount of radiation absorbed by said object,
- comparing said total amount with a pre-defined threshold value for obtaining a difference value, are executed in said decentralised reader.

7. A method according to claim 6, wherein said difference value is sent to a central memory for storing it.

8. A method according to claim 6, wherein said difference value is stored in said electronic memory chip.

9. A method according to claim 6, wherein said steps of
- storing electric signal(s) obtained at said predetermined intervals and processing them so as to evaluate a total amount of radiation absorbed by said object, and
- comparing said total amount with a pre-defined threshold value for obtaining a difference value,
proceed in said processor chip.

10. A method according to claim 1, wherein said object is provided with a radiation absorbing device, including a storage phosphor, for storing energy from said penetrating radiation, and an electroluminescent device, as a source of stimulation light, coupled to said phosphor, in such a way that said stimulation light impinges on said phosphor and wherein in the step of activating said source of stimulation light said storage phosphor emits an amount of fluorescent light in proportion to an amount of stored energy.

11. A method according to claim 10, wherein said steps of activating said source of stimulating light so as to cause said storage phosphor to emit an amount of fluorescent light in proportion to an amount of stored energy, reading said amount of fluorescent light and converting said amount of fluorescent light in an electric signal value, proceed in a decentralised reader.

12. A method according to claim 11, wherein also said steps of
- storing electric signal(s) obtained at said predetermined intervals and processing them so as to evaluate a total amount of radiation absorbed by said object,
- comparing said total amount with a pre-defined threshold value for obtaining a difference value, are executed in said decentralised reader.

## Patentansprüche

1. Ein Verfahren zur Überwachung einer Dosis von durch einen Gegenstand absorbierter durchdringender Strahlung, wobei der Gegenstand mit einem Gerät zum Absorbieren durchdringender Strahlung ausgestattet ist, das einen Energie der durchdringenden Strahlung speichernden Speicherleuchtstoff enthält, wobei das Verfahren durch die nachstehenden Schritte **gekennzeichnet** ist :
- zu vorgegeben Zeitintervallen wird der Speicherleuchtstoff in solcher Weise an eine Anregungslichtquelle angekoppelt, dass das Anregungslicht auf den Leuchtstoff einfällt,
- die Anregungslichtquelle wird eingeschaltet und bewirkt, dass der Speicherleuchtstoff eine proportional zu einer Menge gespeicherter Energie stehende Menge Fluoreszenzlicht emittiert,
- die Menge Fluoreszenzlicht wird ausgelesen und in ein elektrisches Signal umgewandelt,
- das (die) zu den vorgegebenen Zeitintervallen erhaltene(n) elektrische(n) Signal(e) wird (werden) gespeichert und verarbeitet, um eine Gesamtmenge vom Gegenstand absorbierter Strahlung auszuwerten,
- diese Gesamtmenge wird mit einem vordefinierten Schwellenwert verglichen und ein Unterschiedswert bestimmt und
- der Unterschiedswert wird auf einer dezentralisierten Anzeige angezeigt.

2. Verfahren nach Anspruch 1, **dadurch gekennzeichnet, dass** die Anregungslichtquelle ein elektrolumineszierendes Gerät ist.

3. Verfahren nach Anspruch 1 oder 1, **dadurch gekennzeichnet, dass** das Strahlung absorbierende Gerät ferner ein maschinenlesbares Identifikationsmittel aus der Gruppe bestehend aus Strichcodes, Magnetspeichern, einem elektronischen Speicherchip und einem Prozessorchip enthält.

4. Verfahren nach einem der Ansprüche 1 bis 3, **dadurch gekennzeichnet, dass** die Schritte der Einschaltung der Anregungslichtquelle, wodurch der Speicherleuchtstoff eine proportional zu einer Menge gespeicherter Energie stehende Menge Fluoreszenzlicht emittiert, des Auslesens der Menge Fluoreszenzlicht und der Umwandlung der Menge Fluoreszenzlicht in ein elektrisches Signal in einem dezentralisierten Auslesegerät erfolgen.

5. Verfahren nach Anspruch 4, **dadurch gekennzeichnet, dass** das elektrische Signal zu einem Zentralrechner gesendet wird, in dem das (die) elektrische(n) Signal(e) gespeichert und verarbeitet wird (werden), um eine Gesamtmenge vom Gegenstand absorbierter Strahlung auszuwerten, die Gesamtmenge mit einem vorgegebenen Schwellenwert verglichen wird, um einen Unterschiedswert zu bestimmen, und dieser Unterschiedswert zur dezentralisierten Anzeige gesendet wird.

6. Verfahren nach Anspruch 4, **dadurch gekennzeichnet, dass** auch die Schritte
- der Speicherung und Verarbeitung des (der) zu den vorgegebenen Zeitintervallen erfassten elektrischen Signals (Signale), um eine Gesamtmenge vom Gegenstand absorbierter Strahlung auszuwerten,
- und des Vergleichs der Gesamtmenge mit einem vorgegebenen Schwellenwert, wobei ein Unterschiedswert bestimmt wird, im dezentralisierten Auslesegerät erfolgen.

7. Verfahren nach Anspruch 6, **dadurch gekennzeichnet, dass** der Unterschiedswert in einen Zentralspeicher eingespeichert wird.

8. Verfahren nach Anspruch 6, **dadurch gekennzeichnet, dass** der Unterschiedswert in den elektronischen Speicherchip eingespeichert wird.

9. Verfahren nach Anspruch 6, **dadurch gekennzeichnet, dass** die Schritte :
- der Speicherung und Verarbeitung des (der) zu den vorgegebenen Zeitintervallen erfassten elektrischen Signals (Signale), um eine Gesamtmenge vom Gegenstand'absorbierter Strahlung auszuwerten,
- und des Vergleichs der Gesamtmenge mit einem vorgegebenen Schwellenwert, wobei ein Unterschiedswert bestimmt wird, im Prozessorchip erfolgen.

10. Verfahren nach Anspruch 1, **dadurch gekennzeichnet, dass** der Gegenstand mit einem Strahlung absorbierenden Gerät versehen ist, das einen Speicherleuchtstoff, der Energie der durchdringenden Strahlung speichert, und ein elektrolumineszierendes Gerät als Anregungslichtquelle enthält, wobei das elektrolumineszierende Gerät in solcher Weise an den Leuchtstoff gekoppelt ist, dass das Anregungslicht auf den Leuchtstoff auftrifft, und **dadurch gekennzeichnet, dass** der Speicherleuchtstoff im Schritt der Einschaltung der Anregungslichtquelle eine proportional zu einer Menge gespeicherter Energie stehende Menge Fluoreszenzlicht emittiert.

11. Verfahren nach Anspruch 10, **dadurch gekennzeichnet, dass** die Schritte der Einschaltung der Anregungslichtquelle, wodurch der Speicherleuchtstoff eine proportional zu einer Menge gespeicherter Energie stehende Menge Fluoreszenzlicht emittiert, des Auslesens der Menge Fluoreszenzlicht und der Umwandlung der Menge Fluoreszenzlicht in einen elektrischen Signalwert in einem dezentralisierten Auslesegerät erfolgen.

12. Verfahren nach Anspruch 11, **dadurch gekennzeichnet, dass** auch die Schritte
- der Speicherung und Verarbeitung des (der) zu den vorgegebenen Zeitintervallen erfassten elektrischen Signals (Signale), um eine Gesamtmenge vom Gegenstand absorbierter Strahlung auszuwerten,
- und des Vergleichs der Gesamtmenge mit einem vorgegebenen Schwellenwert, wobei ein Unterschiedswert bestimmt wird, im dezentralisierten Auslesegerät erfolgen.

## Revendications

1. Procédé de surveillance d'une dose de rayonnement pénétrant absorbé* par un objet muni d'un dispositif pour absorber le rayonnement pénétrant englobant un luminophore d'emmagasinage pour emmagasiner l'énergie émanant dudit rayonnement pénétrant, **caractérisé par** les étapes consistant à :
- coupler ledit luminophore d'emmagasinage, à des intervalles prédéterminés, à une source de lumière d'excitation de telle sorte que ladite lumière d'excitation entre en contact de manière incidente avec ledit luminophore ;
- activer ladite source de lumière d'excitation pour faire en sorte que ledit luminophore d'emmagasinage émette une quantité de lumière fluorescente proportionnelle à la quantité d'énergie emmagasinée ;
- lire ladite quantité de lumière fluorescente et la transformer en un signal électrique ;
- emmagasiner le signal ou. les signaux électriques obtenus auxdits intervalles prédéterminés et les traiter afin d'évaluer la quantité totale de rayonnement absorbé par ledit objet ;
- comparer ladite quantité totale à une valeur seuil prédéfinie pour obtenir une valeur de différence ; et
- afficher ladite valeur de différence sur un écran décentralisé.

2. Procédé selon la revendication 1, dans lequel ladite source de lumière d'excitation est un dispositif électroluminescent.

3. Procédé selon la revendication 1 ou 2, dans lequel ledit dispositif d'absorption du rayonnement comprend en outre un moyen d'identification assimilable par machine choisie parmi le groupe constitué par des codes à barres, un moyen d'enregistrement magnétique, une puce mémoire électronique et une puce de processeur.

4. Procédé selon l'une quelconque des revendications 1 à 3, dans lequel lesdites étapes consistant à activer ladite source de lumière d'excitation pour faire en sorte que ledit luminophore d'emmagasinage émette une quantité de lumière fluorescente proportionnelle à la quantité d'énergie emmagasinée, lire ladite quantité de lumière fluorescente et transformer ladite quantité de lumière fluorescente en un signal électrique, sont mises en oeuvre dans un lecteur décentralisé.

5. Procédé selon la revendication 4, dans lequel ledit signal électrique est envoyé à un ordinateur central dans le but de mémoriser ledit signal ou lesdits signaux électriques, de les traiter afin d'évaluer une quantité totale de rayonnement absorbé par ledit objet, et de comparer ladite quantité totale à une valeur seuil prédéfinie pour obtenir une valeur de différence, ladite valeur de différence étant envoyée audit affichage décentralisé.

6. Procédé selon la revendication 4, dans lequel lesdites étapes consistant à :
- emmagasiner le signal ou les signaux électriques obtenus auxdits intervalles prédéterminés et les traiter afin d'évaluer la quantité totale de rayonnement absorbé par ledit objet ;
- comparer ladite quantité totale à une valeur seuil prédéfinie pour obtenir une valeur de différence,
sont également mises en oeuvre dans ledit lecteur décentralisé.

7. Procédé selon la revendication 6, dans lequel ladite valeur de différence est envoyée à une mémoire centrale à des fins de mémorisation.

8. Procédé selon la revendication 6, dans lequel ladite valeur de différence est mémorisée dans ladite puce mémoire électronique.

9. Procédé selon la revendication 6, dans lequel lesdites étapes consistant à :
- emmagasiner le signal ou les signaux électriques obtenus auxdits intervalles prédéterminés et les traiter afin d'évaluer la quantité totale de rayonnement absorbé par ledit objet ; et
- comparer ladite quantité totale à une valeur seuil prédéfinie pour obtenir une valeur de différence,
sont mises en oeuvre dans ladite puce de processeur.

10. Procédé selon la revendication 1, dans lequel ledit objet est muni d'un dispositif d'absorption du rayonnement englobant un luminophore d'emmagasinage, pour emmagasiner de l'énergie émanant dudit rayonnement pénétrant, et d'un dispositif électroluminescent, comme source de lumière d'excitation, couplé audit luminophore, de telle sorte que ladite lumière d'excitation entre en contact de manière incidente avec ledit luminophore, et dans lequel, au cours de l'étape consistant à activer ladite source de lumière d'excitation, ledit luminophore d'emmagasinage émet une quantité de lumière fluorescente proportionnelle à la quantité d'énergie emmagasinée.

11. Procédé selon la revendication 10, dans lequel lesdites étapes consistant à activer ladite source de lumière d'excitation pour faire en sorte que ledit luminophore d'emmagasinage émette une quantité de lumière fluorescente proportionnelle à la quantité d'énergie emmagasinée, lire ladite quantité de lumière fluorescente et la transformer en un signal électrique, sont mises en oeuvre dans un lecteur décentralisé.

12. Procédé selon la revendication 11, dans lequel lesdites étapes consistant :
- à emmagasiner le signal ou les signaux électriques obtenus auxdits intervalles prédéterminés et les traiter afin d'évaluer la quantité totale de rayonnement absorbé par ledit objet ;
- comparer ladite quantité totale à une valeur seuil prédéfinie pour obtenir une valeur de différence,
sont également mises en oeuvre dans ledit lecteur décentralisé.
